**Europäisches Patentamt**

**European Patent Office**

**Office européen des brevets**

(11) Veröffentlichungsnummer: **0 216 754**
**B1**

(12) **EUROPÄISCHE PATENTSCHRIFT**

(45) Veröffentlichungstag der Patentschrift: **18.04.90**

(21) Anmeldenummer: **86890266.9**

(22) Anmeldetag: **24.09.86**

(51) Int. Cl.⁵: **B 26 D 5/24, B 26 D 1/143**

(54) **Aufschnittschneidemaschine.**

(30) Priorität: **25.09.85 AT 2796/85**

(43) Veröffentlichungstag der Anmeldung:
**01.04.87 Patentblatt 87/14**

(45) Bekanntmachung des Hinweises auf die
Patenterteilung:
**18.04.90 Patentblatt 90/16**

(84) Benannte Vertragsstaaten:
**AT BE CH DE FR GB IT LI LU NL SE**

(56) Entgegenhaltungen:
**AT-B- 323 593**
**AT-B- 325 450**
**AT-B- 366 616**
**CH-B- 326 939**
**CH-B- 376 381**
**DE-A-2 707 141**
**US-A-3 670 793**

(73) Patentinhaber: **BRAIN DUST PATENTS**
**ESTABLISHMENT**
**Städtle 22**
**FL-9450 Vaduz (LI)**

(72) Erfinder: **Kuchler, Fritz**
**Klatteweg 4**
**A-9010 Klagenfurt (AT)**

(74) Vertreter: **Müllner, Erwin, Dr. et al**
**Patentanwälte Dr. Erwin Müllner Dipl.-Ing.**
**Werner Katschinka Postfach 159 Weihburggasse**
**9**
**A-1010 Wien (AT)**

Courier Press, Leamington Spa, England.

# Beschreibung

Die Erfindung betrifft eine Aufschnittschneidemaschine für Lebensmittel, insbesondere Wurst, mit einem Schnittgutwagen, einer Anschlagplatte, einem Messer und einem Ablegetablett, das als Waagschale einer im Maschinengehäuse vorgesehenen Waage ausgebildet ist wobei das Ablegetablett auf einem Halten eines Tablettträger auf setzbar ist.

Aus der CH—PS 326 939 ist eine solche Aufschnittmaschine bekannt, in deren Gehäuse eine Waage integriert ist. Die geschnittenen Scheiben fallen auf die Schnittgutauffangplatte, die gleichzeitig als Waagschale ausgebildet ist. Es kann auf diese Weise der Schneidevorgang abgebrochen werden, sobald das gewünschte Gewicht erreicht ist. Während die genannte Druckschrift eine Laufgewichtswaage umfaßt, ist in der CH—PS 376 381 eine Zeigerwaage in Kombination mit einer Aufschnitt-Schneidemaschine beschrieben.

Waagen sind Präzisionsinstrumente, müssen geeicht werden und sind mittels einer Libelle waagrecht aufzustellen. Gute Standfestigkeit und ein stabiler Aufstellungsort sind die Voraussetzung.

Unabhängig davon sind Aufschnittschneidemaschinen bekannt, die einen verschiebbaren oder verdrehbaren Tablettträger aufweisen und deren Ablegepunkt variable ist. Diese Maschinen ermöglichen das Schneiden und überlappende Ablegen der geschnittenen Scheiben in Zeilen, die ihrerseits einander teilweise überdecken. Es ergibt sich ein servierfertiger Aufschnitt. Daher werden die in Rede stehenden Maschinen mitunter auch Servierschneidemaschinen genannt.

Die als Thekengeräte ausgebildeten Servierschneidemaschinen mit dem programmgesteuerten, längsverschiebbar angetriebenen Ablegetablett widersprechen den Forderungen, die eine Waage zu erfüllen hat. Eine stationäre Waagschale ist bei Servierschneidemaschinen der genannten Art nicht geeignet. Daher hat der Fachmann den Gedanken des Einbaus einer Waage in einer Aufschnittschneidemaschine mit programmgesteuert angetriebenem längsbeweglichen Ablegetablett, wie die Entwicklung der letzten Jahrzehnte beweist, nicht weiterverfolt.

Die Erfindung zielt darauf ab, eine technische Lösung anzugeben, die es ermöglicht, eine Aufschnittschneidemaschine mit Waage entgegen dem Vorurteil des Fachmannes mit einem längsbeweglichen und gegebenenfalls absenkbaren Ablegetablett auszustatten. Dies wird bei einer Aufschnittschneidemaschine für Lebensmittel, insbesondere Wurst, mit einem Schnittgutwagen, einer Anschlagplatte, einem Messer und einem Ablegetablett, das als Waagschale einer im Maschinengehäuse vorgesehenen Waage ausgebildet ist, wobei das Ablegetablett auf einem Halter eines Tablett-Trägers aufsetzbar ist, dadurch erreicht, daß der Tablett-Träger verfahrbar und gegebenenfalls absenkbar ausgebildet ist, und eine Wiegemeßzelle einerseits lastseitig mit dem Halter verbunden und andererseits auf dem Tablett-träger mitfahrend befestigt ist und daß an die Wiegemeßzelle eine Auswerteschaltung und eine Anzeigeeinrichtung angeschlossen sind.

Diese Merkmale ermöglichen den Einbau eines eichfähigen Wiegesystems in die Aufschnittschneidemaschine mit verfahrbarem und gegebenenfalls absenkbarem Tablett, ohne das äußere Erscheinungsbild der Maschine zu verändern. Die Anzeige als einziger sichtbarer Unterschied zu herkömmlichen Maschinen ist bei der genannten Ausbildung auch dann exakt, wenn die Belastung außermittig auf dem Tablett erfolgt. Ferner kann gemäß der Erfindung an der Auswerteschaltung ein Tastenfeld zur Eingabe eines Kilopreises und gegebenenfalls eines gewünschten Sollgewichtes oder einer Scheibenzahl und eine Verbindungsleitung mit dem Antrieb des Schnittgutwagens zum Ausschalten bei Erreichen des Sollgewichtes oder der Scheibenzahl vorgesehen sein. Dadurch kann ein Aufschnitt exakt nach dem Sollgewicht selbsttätig gelegt werden. Der Verkäufer hat genügend Zeit zur Verfügung, um dem Kunden den weiteren Einkauf beratend zur Verfügung zu stehen. Maschinen mit einer Steuerung für die Ablegeeinrichtung zum Ablegen der geschnittenen Scheiben in paralleln Reihen bzw. in konzentrischen Kreisen sind gemäß einer Weiterbildung der Erfindung dadurch gekennzeichnet, daß die Auswerteschaltung der Wiegemeßzelle mit der Steuerung für die Ablegeeinrichtung elektrisch verbunden ist und bei Eingabe eines gewünschten Sollgewichtes aus dem zugeführten Gewichtswert der ersten geschnittenen Scheibe in einem der Steuerung zugeordneten Rechner die Anzahl der Scheiben pro Reihe zur Erreichung eines symmetrischen Ablegebildes ermittelbar und die Steuerbefehle der Ablegeeinrichtung zuführbar sind. Damit wird in Abhängigkeit vom Gewicht der ersten geschnittenen Scheibe (z.B. 0,83 dag) und vom gewünschten Sollgewicht (z.B. 10 dag) die Verteilung auf möglichst gleich lange Zeilen ermittelt, sodaß sich ein ansprechendes Ablegebild ergibt (z.B. 3 Zeilen à 4 Blatt). Ferner ist es zweckmäßig, wenn die Wiegemeßzelle und bzw. oder die Auswerteschaltung und bzw. oder die Anzeigeeinrichtung beim intermittierenden Einschalten der Ablegeeinrichtung, insbesondere des Schlägerantriebes zum Abwerfen einer geschnittenen Scheibe kurzzeitig ausschaltbar ist. Dadurch werden die während des Ablegevorganges durch die auf das Ablegetablett fallenden Scheiben ausgelösten Stöße und die damit kurzzeitig auftretenden falschen Meßwerte von der Anzeige ferngehalten. Ein in der Anzeigevorrichtung vorgesehener oder dieser vorgeschalteter Speicher kann den stabilen Meßwert so lange an die Anzeige weiterleiten, bis ein neuer, stabiler Meßwert vorliegt. Auf diese Weise ergibt sich eine stetige Anzeige während des Aufschnittschneidevorganges.

Bei einer anderen Ausführungsform ist im Stromkreis zwischen der Wiegemeßzelle und der Anzeigevorrichtung eine elektrische Dämpfungs- oder Verzögerungsschaltung bzw. ein Zeitglied zur Austastung der von den Schwingungen des Ablegetabletts während des Auftreffens einer abgeworfenen geschnittenen Scheibe hervorgerufenen pendelnden Meßwert vorgesehen. Auch in diesem Fall bleibt die Anzeige von den Störfaktoren durch das Abwerfen der Scheiben von der Ablegeeinrichtung auf das Ablegetablett unbeeeinflußt. Mit der Maschine steht ein Schneidwaage-Zentrum zur Verfügung, das nicht nur eine enorme Arbeitserleichterung für den Verkäufer mit sich bringt, sondern auch einen den Wünschen des Kunden gerechten, nach Gewicht und Ablegebild ohne Handberührung erstellten Aufschnitt selbsttätig bereitet.

Ausführungsbeispiele des Erfindungsgegenstandes sind in den Zeichnungen dargestellt. Fig. 1 zeigt eine schematische Ansicht einer Aufschnittschneidemaschine gemäß der Erfindung, gesehen von der Bedienungsseite. Fig. 2 als Detail eine Seitenansicht des Tablett-Trägers mit Wiegemeßzelle geschnitten nach der Linie II—II und Fig. 3 eine Draufsicht auf den Tablett-Träger, die Wiegemeßzelle und den Rahmen für das Tablett.

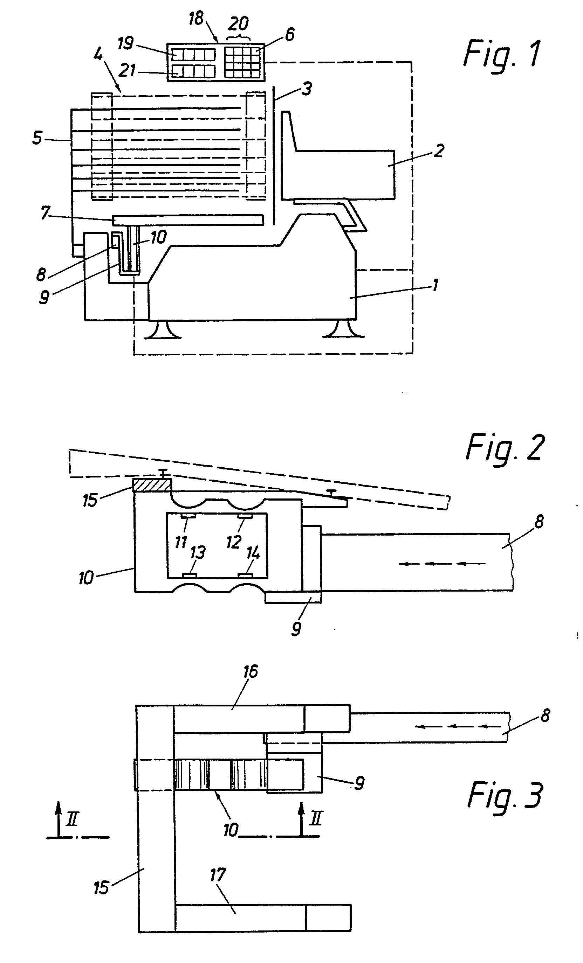

Eine Aufschnittschneidemaschine nach Fig. 1 umfaßt ein Grundgehäuse 1 mit einem auskuppelbaren Antrieb für einen Schnittgutwagen 2, dem gegenüberliegend eine verstellbar Anschlagplatte und in deren Verlängerung ein rotierendes Kreismesser 3 vorgesehen sind. Ein Kettenrahmen 4 mit Walzen und parallelen Ketten mit nadelartigen Spikes sowie ein Schläger 5, dessen Finger die Ketten in der Ruhestellung hintergreifen, bilden die Ablegeeinrichtung. Der Antrieb der Walzen des Kettenrahmens liegt im Grundgehäuse 1 und ist programmgesteuert, sodaß sich je nach Programmwahl (Programmtasten 6) ein unterschiedlicher Förderweg der Ketten für die jeweils auf den Spikes aufgespießten geschnittenen Scheiben ergibt. Die Scheiben werden von den Spikes durch die Finger des umklappbaren Schlägers abgezogen und auf das Ablegetablett 7 punktgenau geworfen. Das Ablegetablett 7 ist auf einem Tablett-Träger 8 lösbar befestigt. Der Träger 8 wird programmgesteuert schrittweise parallel verschoben, damit parallele Zeilen von Scheiben über die gesamte Fläche des Ablegetabletts 7 abgelegt werden können. Ein flächendeckender Aufschnitt wird somit einerseits durch den variablen Ablegepunkt der Ablegeeinrichtung 4, 5 und anderseits durch Parallelverschieben des Ablegetabletts 7 erreicht.

Auf dem Träger 8 ist ein Winkelstück 9 befestigt, welches eine Wiegemeßzelle 10 trägt. Diese Zelle 10 hat die Form eines auskragenden Rahmens, der bei Belastung einer Biegeverformung unterworfen ist. Im Bereich von vier Querschnittsverengungen des Rahmens sind elektrische Dehnungsmeßstreifen (Widerstände) 11, 12, 13, 14 vorgesehen, die als elektrische Brücke (Wheatstone-Brücke) geschaltet sind. Die Wiegemeßzelle 10 trägt einen steifen Balken 15, von welchem die Arme 16, 17 ausgehen. Diese U-förmige Tragekonstruktion (Fig. 3) für das Ablegetablett 7 (in Fig. 2 strichliert dargestellt) wird selbst nur von der Meßzelle 10 getragen und folgt den Bewegungen des Tablett-Trägers 8 gemäß der Programmsteuerung der Aufschnittschneidemaschine.

Das elektrische Signal der mitfahrenden Wiegemeßzelle 10 gelangt z.B. über eine flexible Leitung in einer Auswerteschaltung im Grundgehäuse 1 oder unmittelbar im Steuerungsteil 18, welcher als Kästchen über der Ablegeeinrichtung 4 angeordnet ist. Auf einem Anzeigefeld 19 wird das Ist-Gewicht angezeigt. Über eine Tastatur 20 kann ferner ein Kilopreis zur Anzeige eines mit dem Ist-Gewicht korrespondierenden Aufschnittpreises angezeigt werden. Dazu ist das Anzeigefeld 21 vorgesehen. Über die Tastatur kann ferner noch ein Sollgewicht (z.B. 10 dag) eingetastet werden. Sobald das Soll-Gewicht mit dem Ist-Gewicht übereinstimmt, gibt die Maschine bei Handbetrieb ein Signal ab. Bei Automatikbetrieb, das heißt bei selbsttätig hin- und herfahrendem Schnittgutwagen 2, wird der Antrieb des Schnittgutwagens bei Erreichen des Soll-Gewichtes abgeschaltet. Die Verknüpfung zwischen Wiegemeßzell 10, Maschinensteuerung im Grundgehäuse 1 und dem Anzeige- und Steuerungsteil 18 ist durch strichlierte Linien in Fig. 1 dargestellt. Die vorgenannte Abschaltung kann auch bei Erreichen eines Soll-Betrages erfolgen.

Mit dem Erfassen des Gewichtes der ersten abgelegten Scheibe auf dem Tablett 7 kann bei Eingabe eines Sollgewichtes oder Sollbetrages in einem Rechner der Steuerung für die Ablegeeinrichtung 4, 5, und den Tablettvorschub (Träger 8) das Ablegebild des Aufschnitts so ermittelt werden, daß sich vollständig ausgefüllte Zeilen ergebben (Blocksatz). Es werden also die Scheibenzahl pro Zeile und die Zeilenzahl sowie gegebenenfalls die Abstände zwischen den Scheiben einer Zeile auf das Sollgewicht abgestimmt. Wird ein Rundteller verwendet, dann kann eine Gewichtsmeßzelle ebenfalls zwischen dem zentralen Drehzapfen und dem runden Tablett eingebaut werden, sodaß sich hinsichtlich der Signalauswertung die oben beschriebenen Möglichkeiten in gleicher Weise ergeben.

## Patentansprüche

1. Aufschnittschneidemaschine für Lebensmittel, insbesondere Wurst, mit einem Schnittgutwagen (2), einer Anschlagplatte, einem Messer (3) und einem Ablegetablett (7), das als Waagschale einer im Maschinengehäuse vorgesehenen Waage ausgebildet ist, wobei das Ablegetablett (7) auf einem Halter eines Tablett-Trägers (8) aufsetzbar ist, dadurch gekennzeichnet, daß der Tablett-Träger (8) verfahrbar und gegebenenfalls absenkbar ausgebildet ist und eine Wiegemeßzelle (10) einerseits lastseitig mit dem Halter verbunden und anderseits auf dem Tablett-Träger (8) mitfahrend befestigt ist und daß an die Wiegemeßzelle (10) eine Auswerteschaltung und eine Anzeigeeinrichtung (19, 21) angeschlossen ist.

2. Aufschnittschneidemaschine nach Anspruch 1, dadurch gekennzeichnet, daß der Halter aus einem im wesentlichen U-förmigen Rahmen aus einem Balken (15) mit an den Enden auskragenden Armen (16, 17) besteht.

3. Aufschnittschneidemaschine nach Anspruch 1 mit einem automatisch angetriebenen Schnittgutwagen, dadurch gekennzeichnet, daß an der Auswerteschaltung ein Tastenfeld (20) zur Eingabe eines Kilopreises und gegebenenfalls eines gewünschten Sollgewichtes oder einer Scheibenzahl und eine Verbindungsleitung mit dem Antrieb des Schnittgutwagens (2) zum Ausschalten bei Erreichen des Sollgewichtes oder der Scheibenzahl vorgesehen sind.

4. Aufschnittschneidemaschine nach Anspruch 1 mit einer Steuerung für die Ablegeeinrichtung zum Ablegen der geschnittenen Scheiben in parallelen Reihen bzw. in konzentrischen Kreisen, dadurch gekennzeichnet, daß die Auswerteschaltung der Wiegemeßzelle (10) mit der Steuerung für die Ablegeeinrichtung (4, 5) elektrisch verbunden ist und bei Eingabe eines gewünschten Sollgewichtes aus dem zugeführten Gewichtswert der ersten geschnittenen Scheibe in einem der Steuerung zugeordneten Rechner die Anzahl der Scheiben pro Reihe zur Erreichung eines symmetrischen Ablegebildes ermittelbar und die Steuerbefehle der Ablegeeinrichtung (4) zuführbar sind.

5. Aufschnittschneidemaschine nach einem der Ansprüche 1 bis 4, dadurch gekennzeichnet, daß die Wiegemeßzelle (10) und bzw. oder die Auswerteschaltung und bzw. oder die Anzeigeeinrichtung beim intermittierenden Einschalten der Ablegeeinrichtung (19, 21), insbesondere des Schlägerantriebes zum Abwerfen einer geschnittenen Scheibe kurzzeitig ausschaltbar ist.

6. Aufschnittschneidemaschine nach einem der Ansprüche 1 bis 4, dadurch gekennzeichnet, daß im Stromkreis zwischen der Wiegemeßzelle (10) und der Anzeigevorrichtung eine elektrische Dämpfungs- oder Verzögerungsschaltung bzw. ein Zeitglied zur Austastung der von den Schwingungen des Ablegetabletts (7) während des Auftreffens einer abgeworfenen geschnittenen Scheibe hervorgerufenen pendelnden Meßwerte vorgesehen ist.

**Revendications**

1. Trancheuse de charcuterie pour produits alimentaires, en particulier la charcuterie, avec un chariot portant le produit à trancher, une plaque de butée, un couteau et un plateau récepteur conçu comme plateau de pesée d'une balance prévue à l'intérieur du bâti, caractérisée par le fait que le plateau récepteur (7), comme on sait, être placé sur la fixation d'un porte-plateau (8) à déplacement horizontal et le cas échéant vers le bas, et qu'un capteur de pesée (10) est d'une part relié du côté de la charge à la fixation, et d'autre part fixé et entraîné par le porte-plateau (8), et que, comme on sait, un circuit d'analyse et un dispositif d'affichage (19, 21) sont connectés au capteur de pesée (10).

2. Trancheuse de charcuterie selon la revendication 1, caractérisée par le fait que la fixation est constituée d'un châssis essentiellement en U, formé par une barre (15) dont les bras (16, 17) font saillie aux extrémités.

3. Trancheuse de charcuterie selon la revendication 1 avec un chariot à entraînement automatique, caractérisée par le fait que sur le circuit d'analyse sont prévus in panneau à touches (20) pour l'entrée d'un prix au kilo et le cas échéant d'un poids nominal souhaité, ou d'un nombre de tranches, ainsi qu'une ligne de liaison avec l'entraînement du chariot (2) pour la mise hors circuit lorsque le poids nominal ou le nombre de tranches est atteint.

4. Trancheuse de charcuterie selon la revendication 1, avec une commande pour le dispositif récepteur pour la mise en place des tranches coupées en lignes parallèles resp. en cercles concentriques, caractérisée par le fait que le circuit d'analyse du capteur de pesée (10) est connecté par voie électrique à la commande du dispositif récepteur (4, 5), et que lors de l'entrée d'un poids nominal souhaité un ordinateur affecté à la commande peut, à la base de la valeur introduite du poids de la première tranche coupée, calculer le nombe de tranches par rangée permettant l'obtention d'une disposition symmetrique, et que les instructions de commande peuvent être transmises au dispositif récepteur (4).

5. Trancheuse de charcuterie selon l'une des revendications 1 à 4, caractérisée par le fait que le capteur de pesée et resp. ou le circuit d'analyse et resp. ou le dispositif d'affichage peuvent être temporairement mis hors circuit lors de la mise en circuit intermittente du dispositif récepteur, en particulier de l'entraînement du détacheur assurant le déchargement d'une tranche coupée.

6. Trancheuse de charcuterie selon l'une des revendications 1 à 4, caractérisée par le fait que dans le circuit entre le capteur de pesée et le dispositif d'affichage, un circuit électrique d'atténuation ou de retard, resp. un relais de temporisation pour la suppression des valeurs de mesure oscillantes qui se manifestent lors de l'impact d'une tranche coupée et déchargée, est prévu.

**Claims**

1. Slicing machine for food products, in particular sandwich meats, with a material feeding unit, an end-stopping plate, a knife, and a slice receiver which is embodied as the weighing tray of a weighing unit that is provided in the machine housing, characterized in that the receiving tray (7) may be mounted on one of the supports of a tray rest (8), in a known manner, which may be moved back and forth and, possibly, lowered, and a weighing cell (10) is connected, on the one hand, with its load side to the support and, on the other hand, to the tray rest (8), moving concurrently with it, and in that a processor circuit and a display unit (19, 21) are connected to the weighing cell (10) in a known manner.

2. Slicing machine for food products according to Claim 1, characterized in that the support consists of an essentially U-shaped frame, consisting of a bar (15) and arms (16, 17) which project from its ends.

3. Slicing machine for food products according to Claim 1 with an automatically driven material feeding unit, characterized in that a keyboard (20) is provided with the processor circuit, where the kilo price may be entered and, possibly, a desired nominal weight or a number of slices, and a connecting line to the drive of the material feeding unit (2), as a cut-off when the desired weight or number of slices is reached.

4. Slicing machine for food products according to Claim 1 with a control for the material depositing unit which deposits the cut slices in parallel rows or concentric circles, characterized in that the processor circuit of the weighing cell (10) has an electric connection to the control of the material depositing device (4, 5), and when entering a desired nominal weight, a computer, attached to the control, can use the supplied weight value for the first cut slice to determine the number of slices per row which produce a symmetric slice depositing pattern, and respective control commands may be fed to the material depositing unit (4).

5. Slicing machine for food products according to one of Claims 1 to 4, characterized in that the weighing cell and/or the processor circuit and/or the display unit may be cut off briefly during the intermittent action of the material depositing unit, in particular of the striker drive which deposits the cut slice.

6. Slicing machine for food products according to one of Claims 1 to 4, characterized in that an electric damping or delaying circuit, or a time element, is provided between the weighing cell and the display unit which senses the fluctuations in measuring values that are caused by the vibrations of the receiving tray when it receives a cut slice from the striker.

Fig. 1

Fig. 2

Fig. 3